# EUROPÄISCHE PATENTSCHRIFT

(11) **EP 2 271 524 B1**
(45) Veröffentlichungstag und Bekanntmachung des Hinweises auf die Patenterteilung: **26.12.2012**
(21) Anmeldenummer: 09727823.8
(22) Anmeldetag: 02.02.2009
(51) Int. Cl.: B60S 1/40, B60S 1/38

(54) **VORRICHTUNG ZUM GELENKIGEN VERBINDEN EINES WISCHBLATTS MIT EINEM WISCHARM**
DEVICE FOR THE ARTICULATED CONNECTION OF A WIPER BLADE TO A WIPER ARM
DISPOSITIF DE LIAISON ARTICULEE ENTRE UN BALAI D'ESSUIE-GLACE ET UN BRAS D'ESSUIE-GLACE

(30) Priorität: 02.04.2008 DE 102008000933
(43) Veröffentlichungstag der Anmeldung: 12.01.2011
(73) Patentinhaber: Robert Bosch GmbH, 70442 Stuttgart (DE)
(72) Erfinder: OP'T ROODT, Inigo, B-3500 Hasselt (BE); DE BLOCK, Peter, B-3545 Halen (BE)
(86) Internationale Anmeldenummer: PCT/EP2009/051147
(87) Internationale Veröffentlichungsnummer: WO 2009/121642

(56) Entgegenhaltungen:
- DE-C- 820 700
- DE-C- 944 353
- FR-A- 2 548 115
- FR-A- 2 747 980
- FR-A- 2 847 221

## Beschreibung

### Stand der Technik

Die Erfindung geht von einer Vorrichtung nach dem Oberbegriff des Anspruchs 1 aus.

Scheibenwischer in Flachbalkenbauweise sind in zahlreichen Varianten bekannt. Sie besitzen als Tragelement für eine - Wischleiste eine oder mehrere Federschienen aus Kunststoff oder Federstahl in verschiedenartigen Formen und Anordnungen. Die Tragelemente sind über Vorrichtungen gelenkig mit einem Wischarm verbunden. Die Vorrichtungen umfassen in der Regel ein Anschlusselement, das mit dem Wischblatt, insbesondere seinem Tragelement zu verbinden ist und ein Verbindungselement, das am freien Ende des Wischarms befestigt wird. Dabei besteht die Möglichkeit, dass eine Ausführung nach dem "Sidelock-Prinzip" gewählt wird, bei dem der Wischarm seitlich vom Wischblatt verläuft, oder eine Ausführung nach dem "Toplock-Prinzip", bei dem der Wischarm oberhalb des Wischblatts verläuft. Im Folgenden ist beispielhaft auf eine der zahlreichen Druckschriften verwiesen.

Aus der DE 199 14 413 A1 ist ein Scheibenwischer bekannt, dessen Wischarm an seinem freien Ende über eine Anschlussvorrichtung an einem gelenkfreien Wischblatt in Flachbalkenbauweise lösbar angelenkt ist. Die Anschlussvorrichtung besitzt ein Anschlusselement, das auf einem Tragelement des Wischblatts befestigt ist und an seiner Frontseite eine Gelenkachse in Form zweier seitlich angeordneter Lagerzapfen besitzt. An seinem der Gelenkachse entgegengesetzten Ende hat das Anschlusselement Lagerflächen, die zur Gelenkachse weisen und mit Lagerflächen an einem Verbindungsteil ein Gegenlager bilden. Das Verbindungselement der Anschlussvorrichtung besitzt an seiner Frontseite eine offene Nabe, die in seitlichen Führungswänden vorgesehen ist und in der die Lagerzapfen des Anschlusselements im montierten Zustand gelagert sind. Das Verbindungselement ist seitlich zur offenen Nabe an einem Wischarm befestigt. Die offene Nabe weist dabei parallel versetzt zum Wischarm in Richtung seines freien Endes, sodass das am Wischblatt befestigte Anschlusselement parallel zum Wischarm zwischen die seitlichen Führungswände des Verbindungselements geschoben werden kann, bis die seitlichen Lagerzapfen an den Lagerflächen der offenen Nabe zur Anlage kommen. Während der Montage werden die zum Gegenlager gehörenden Lagerflächen, die an Federzungen des Anschlusselements seitlich nachgiebig angeordnet sind, nach innen gedrückt und stellen sich wieder elastisch nach außen in die alte Position zurück, sobald sie die korrespondierenden Lagerflächen an dem zweiten Anschlussteil passiert haben.

FR-A-2747980 offenbart den Oberbegriff des Anspruchs 1.

### Offenbarung der Erfindung

Nach der Erfindung ist zwischen dem Anschlusselement und dem Verbindungselement mindestens ein Dämpfungselement angeordnet. Das Dämpfungselement reduziert Geräusche, die sich beim Umlegen der Wischleiste in den Umkehrlagen des Scheibenwischers ergeben können. Ferner verringert es die Kraft, die beim Aufprall des Scheibenwischers auf die Fahrzeugscheibe entsteht, indem der Scheibenwischer unbeabsichtigt auf die Fahrzeugscheibe schlägt. Schließlich werden Geräusche reduziert, wenn der Scheibenwischer infolge verschmutzter, vereister oder trockener Scheiben rattert.

Nach der Erfindung ist es jedoch zweckmäßig, zwischen den Seitenwänden des Anschlusselements am Boden des Anschlusselements mindestens zwei Querrippen vorzusehen, die zwischen sich einen Zwischenraum bilden, der in Betriebsstellung des Wischblatts vom Verbindungselement überdeckt wird, und in dem das Dämpfungselement untergebracht ist. Das Verbindungselement stützt sich somit in der Betriebsstellung des Scheibenwischers über das Dämpfungselement am Anschlusselement und damit am Wischblatt ab, sodass es bei einer Relativbewegung zwischen dem Verbindungselement und dem Anschlusselement eine dämpfende Wirkung ausübt.

Die Dämpfungseigenschaften des Dämpfungselements können durch die Form und den Werkstoff des Dämpfungselements modifiziert und auf den jeweiligen Einsatzfall abgestimmt werden. Vorteilhaft ist es, wenn das Dämpfungselement die Gestalt eines Prismas mit einem länglichen Querschnitt, insbesondere eines rhombischen Prismas, oder eines Zylinders besitzt, sodass zwischen den angrenzenden Bauteilen, dem Verbindungselement oder dem Anschlusselement eine linienartige oder kleinflächige Berührung stattfindet. Gemäß einer Ausgestaltung der Erfindung ist vorgesehen, dass das Dämpfungselement ein Hohlprofil ist, wobei der Hohlraum das Dämpfungselement zweckmäßigerweise quer zur Längsrichtung des Wischblatts durchdringt.

Damit für das Dämpfungselement ein ausreichender Dämpfungsweg zur Verfügung steht, ist ein genügendes Lagerspiel zwischen den Gelenkteilen des Anschlusselements und dem Gelenkteil des Verbindungselements vorzusehen. Gemäß einer Ausgestaltung der Erfindung wird vorgeschlagen, dass die Seitenwände des Anschlusselements von den Seitenwänden des Verbindungselements überdeckt werden und in Längsrichtung des Verbindungselements in Längsschlitze des Verbindungselements eingreifen. Dadurch besitzt die Vorrichtung eine sehr präzise Seitenführung, die bei einem großen Gelenkspiel nicht ohne weiteres gegeben wäre.

Nach, einer weiteren Ausgestaltung der Erfindung wird vorgeschlagen, dass in den Seitenwänden des Verbindungselements einander gegenüberliegende Langlöcher vorgesehen sind, die quer zur Längsrichtung des Wischblatts verlaufen und mit Lagerzapfen an den Seitenwänden des Anschlusselements die Gelenkteile des Gelenks bilden. Somit wird ein ausreichender Dämpfungsweg etwa senkrecht zur Fahrzeugscheibe gewährleistet, während in Längsrichtung des Wischblatts eine präzise Führung gegeben ist.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht einer erfindungsgemäßen Vorrichtung mit einem Teilschnitt,
- Fig. 2: einen Schnitt entsprechend der Linie II-II in Fig. 1,
- Fig. 3: eine Variante eines Dämpfungselements nach Fig. 2,
- Fig. 4: einen Schnitt entsprechend der Linie III-III in Fig. 1,

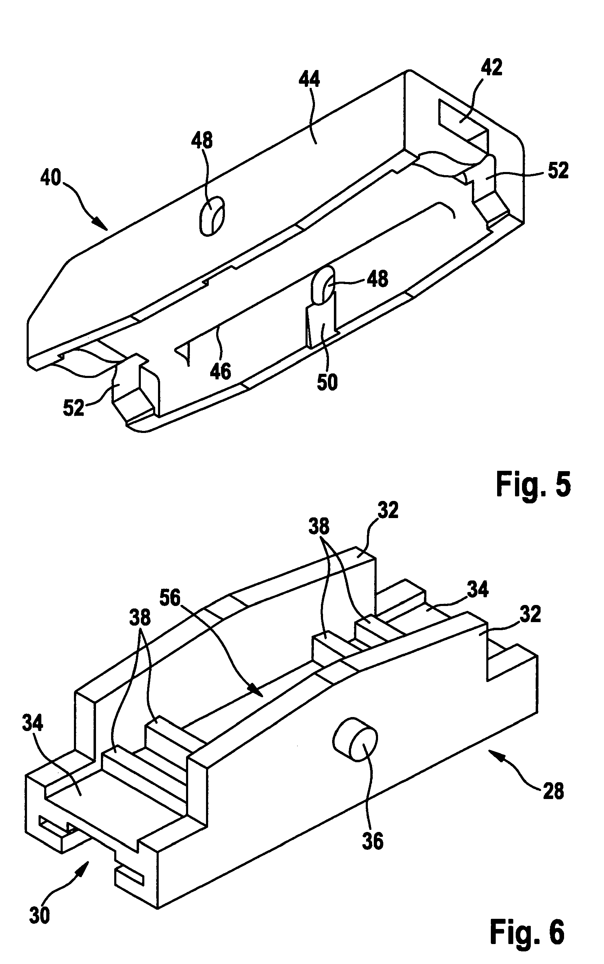

- Fig. 5: eine perspektivische Ansicht eines Verbindungselements von unten und
- Fig. 6: eine perspektivische Ansicht eines Anschlusselements von oben.

### Ausführungsformen der Erfindung

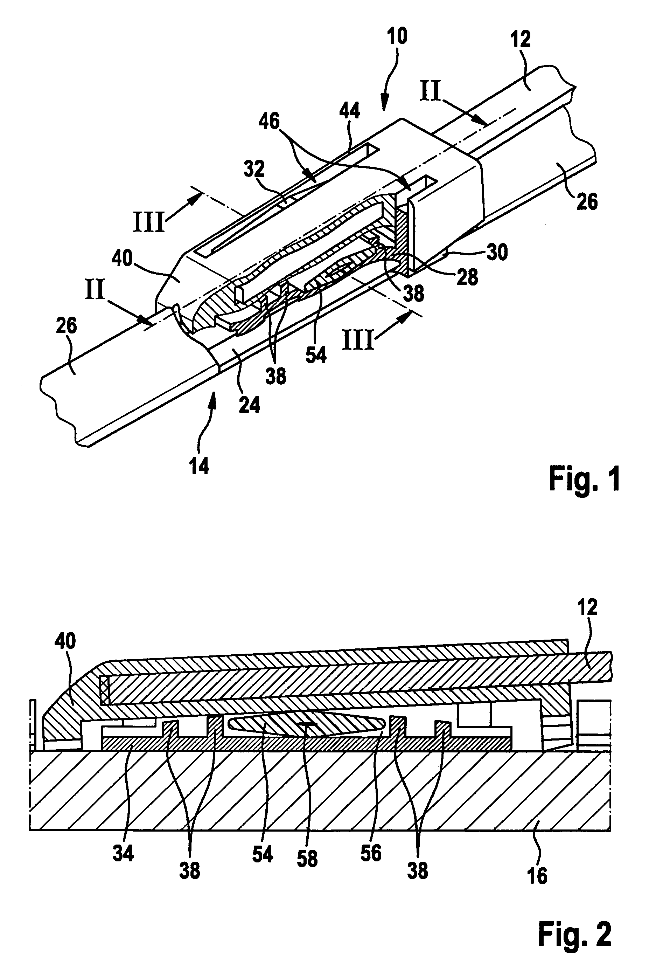

Ein Wischblatt 14 besitzt eine Wischleiste 16, deren Wischlippe 18 über einen Kippsteg 20 mit einer Kopfleiste 22 verbunden ist. In seitlichen Längsnuten sind Federschienen 24 eingesetzt, die ein Stück weit aus den Längsnuten vorstehen und auf ihren vorstehenden Teilen Spoiler 26 und eine Vorrichtung 10 zum gelenkigen Verbinden des Wischblatts 14 mit einem Wischarm 12 tragen. Die Vorrichtung 10 umfasst ein Anschlusselement 28 mit einem Boden 34 und zwei in Längsrichtung verlaufenden Seitenwänden 32, die einem am Wischarm 12 befestigten Verbindungselement 40 zugewandt sind. Das Anschlusselement 28 sitzt mit einer Führung 30 auf den als - Tragelement dienenden Federschienen 24, indem es die Federschienen 24 an deren äußeren Längskanten umfasst. An der Innenseite des Bodens 34 befinden sich zwischen den Seitenwänden 32 Querrippen 38. Zwei benachbarte Querrippen 38 bilden im Bereich von Lagerzapfen 36 an den Außenseiten der Seitenwände 32 einen Zwischenraum 56 zur Aufnahme eines Dämpfungselements 54, 60. In der Betriebsstellung (Fig. 1) wird der Zwischenraum 56 von dem Verbindungselement 40 überdeckt, sodass sich das Dämpfungselement 54, 60 sowohl am Boden 34 des Anschlusselements 28 als auch am Hohlprofil 42 des Verbindungselements 40 abstützt. Somit wird eine Relativbewegung zwischen dem Verbindungselement 40 und dem Anschlusselement 28 durch das Dämpfungselement 54 gedämpft.

Das Dämpfungselement 54, 60 kann aus einem geeigneten Kunststoff oder Gummi gefertigt sein. Vorteilhafterweise hat es die Gestalt eines Hohlprofils, dessen Hohlraum 58 das Dämpfungselement 54 quer zur Längsrichtung des Wischblatts 14 durchdringt.

Die Lagerzapfen 36 des Anschlusselements 28 bilden mit Langlöchern 48, die in den Seitenwänden 44 des Verbindungselements 40 vorgesehen sind und in einer Richtung etwa senkrecht zur Längsrichtung des Wischblatts 14 verlaufen, ein Gelenk. Die Langlöcher 48 werden so dimensioniert, dass sie in der Hauptdämpfungsrichtung einen ausreichenden Dämpfungsweg zulassen, jedoch in Längsrichtung des Wischblatts 14 dieses präzise führen. Zur seitlichen Führung greifen die Seitenwände 32 des Anschlusselements 28 in Längsschlitze 46 des Verbindungselements 40 ein.

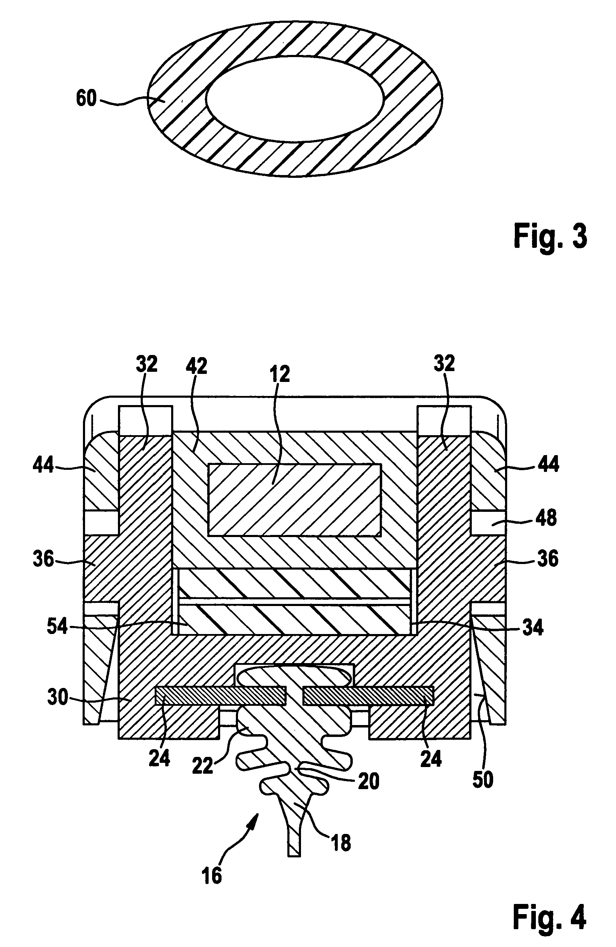

Das Dämpfungselement 54 (Fig. 1 und Fig. 2) besitzt die Gestalt eines rhombischen Prismas, bei dem von zwei einander gegenüberliegenden Kanten sich die eine an dem Anschlusselement 28 und die andere an dem Verbindungselement 40 abstützen. Fig. 3 zeigt ein Dämpfungselement 60 mit einer zylindrischen Gestalt. Dabei handelt es sich um einen Hohlzylinder mit einer elliptischen Grundfläche. Es können jedoch auch Dämpfungselemente mit anderen Querschnittsformen, z.B. kreisförmigen Querschnittsformen, in Betracht gezogen werden.

Bei der Montage wird zunächst das Verbindungselement 40 mit seinem Hohlprofil 42 auf den Wischarm 12 geschoben und dort befestigt. Danach wird das Wischblatt 14 mit seinem Anschlusselement 28 quer zu seiner Längsrichtung am Verbindungselement 40 befestigt, indem die Lagerzapfen 36 über Montageschrägen 50 in die Langlöcher 48 eingeklippst werden. Hierbei geben die Seitenwände 44 des Verbindungselements 40 vorübergehend elastisch nach außen nach, sodass die Lagerzapfen 36 in die Langlöcher 48 einrasten können.

Die Erfindung kann bei allen Scheibenwischern in Flachbalkenbauweise angewandt werden. Wesentlich ist nur, dass die Relativbewegung zwischen dem Anschlusselement 28 und dem Verbindungselement 40 in der Betriebsstellung durch das Dämpfungselement 54 gedämpft ist.

## Patentansprüche

1. Vorrichtung (10) zum gelenkigen Verbinden eines Wischblatts (14) mit einem Wischarm (12), wobei ein mit dem Wischblatt (14) zu verbindendes Anschlusselement (28) ein Gelenkteil (36) aufweist, das mit einem Gelenkteil (48) an einem mit dem Wischarm (12) zu verbindenden Verbindungselement (40) ein Gelenk bildet, und sich Seitenwände (32, 44) des Anschlusselements (28) und des Verbindungselements (40) überlappen, wobei zwischen dem Anschlusselement (28) und dem Verbindungselement (40) mindestens ein Dämpfungselement (54, 60) angeordnet ist, **dadurch gekennzeichnet, dass** zwischen den Seitenwänden (32) des Anschlusselements (28) am Boden (34) des Anschlusselements (28) mindestens zwei Querrippen (38) vorgesehen sind, die zwischen sich einen Zwischenraum (56) bilden, der in Betriebsstellung des Wischblatts (14) vom Verbindungselement (40) überdeckt wird und in dem das Dämpfungselement (54, 60) untergebracht ist, wobei sich das, Dämpfungselement (54, 60) am Anschlusselement (28) und am Verbindungselement (40) abstützt.

2. Vorrichtung (10) nach Anspruch 1, **dadurch gekennzeichnet, dass** das Dämpfungselement (54, 60) im Bereich des Gelenks (36, 48) angeordnet ist

3. Vorrichtung (10) nach einem der Ansprüche 1 oder 2, **dadurch gekennzeichnet. dass** das Dämpfungselement (60) ein Zylinder ist.

4. Vorrichtung (10) zum gelenkigen Verbinden eines Wischblatts (14) mit einem Wischarm (12), wobei ein mit dem Wischblatt (14) zu verbindendes Anschlusselement (28) ein Gelenkteil (36) aufweist, das mit einem Gelenkteil (48) an einem mit dem Wischarm (12) zu verbindenden Verbindungselement (40) ein Gelenk bildet, und sich Seitenwände (32, 44) des Anschlusselements (28) und des Verbindungselements (40) überlappen, wobei zwischen dem Anschlusselement (28) und dem Verbindungselement (40) mindestens ein Dämpfungselement (54, 60) angeordnet ist, **dadurch gekennzeichnet, dass** das Dämpfungselement (54) ein im Querschnitt längliches Prisma, insbesondere ein rhombisches Prisma, ist, das mit einer Kante am Boden (34) des Anschlusselements (28) anliegt, während die gegenüberliegende Kante dem Verbindungselement (40) zugewandt ist.

5. Vorrichtung (10) nach einem der vorhergehenden Ansprüche, **dadurch gekennzeichnet, dass** das Dämpfungselement (54, 60) ein Hohlprofit ist, dessen Hohlraum (58) quer zu Längsrichtung des Wischblatts (14) verläuft.

6. Vorrichtung (10) nach einem der vorhergehenden Ansprüche, **dadurch gekennzeichnet, dass** die Seitenwände (32) des Anschlusselements (28) von außen von den Seitenwänden (44) des Verbindungselements (40) überdeckt werden und in Längsschlitze (46) des Verbindungselements (40) eingreifen.

7. Vorrichtung (10) nach einem der vorhergehenden Ansprüche, **dadurch gekennzeichnet, dass** in den Seitenwänden (44) des Verbindungselements (40) einander gegenüberliegende Langlöcher (48) vorgesehen sind, die mit Lagerzapfen (36) an den Seitenwänden (32) des Anschlusselements (28) die Gelenkteile des Gelenks bilden.

8. Vorrichtung (10) nach Anspruch 7, **dadurch gekennzeichnet, dass** an den Innenseiten der Seitenwände (44) des Verbindungselements (40) von den Kanten, die dem Anschlusselement (28) zugewandt sind, Montageschrägen (50) zu den Langlöchern (48) führen.

9. Wischblatt (14) umfassend eine Vorrichtung (10) nach einem der vorhergehenden Ansprüche.

## Claims

1. Device (10) for the articulated connection of a wiper blade (14) to a wiper arm (12), wherein an attachment element (28) for connecting to the wiper blade (14) has a joint part (36) which forms a joint with a joint part (48) on a connecting element (40) for connecting to the wiper arm (12), and side walls (32, 44) of the attachment element (28) and of the connecting element (40) overlap, wherein at least one damping element (54, 60) is arranged between the attachment element (28) and the connecting element (40), **characterized in that** at least two transverse ribs (38) are provided on the base (34) of the attachment element (28) between the side walls (32) of the attachment element (28), which transverse ribs form between them an intermediate space (56) which is covered by the connecting element (40) when the wiper blade (14) is in the operating position and in which the damping element (54, 60) is accommodated, wherein the damping element (54, 60) is supported on the attachment element (28) and on the connecting element (40).

2. Device (10) according to Claim 1, **characterized in that** the damping element (54, 60) is arranged in the region of the joint (36, 48).

3. Device (10) according to either of Claims 1 and 2, **characterized in that** the damping element (60) is a cylinder.

4. Device (10) for the articulated connection of a wiper blade (14) to a wiper arm (12), wherein an attachment element (28) for connecting to the wiper blade (14) has a joint part (36) which forms a joint with a joint part (48) on a connecting element (40) for connecting to the wiper arm (12), and side walls (32, 44) of the attachment element (28) and of the connecting element (40) overlap, wherein at least one damping element (54, 60) is arranged between the attachment element (28) and the connecting element (40), **characterized in that** the damping element (54) is a prism which is elongate in cross section, in particular a rhombic prism, which bears with one edge against the base (34) of the attachment element (28) while the opposite edge points toward the connecting element (40).

5. Device (10) according to one of the preceding claims, **characterized in that** the damping element (54, 60) is a hollow profile, the cavity (58) of which runs perpendicular to the longitudinal direction of the wiper blade (14).

6. Device (10) according to one of the preceding claims, **characterized in that** the side walls (32) of the attachment element (28) are covered from the outside by the side walls (44) of the connecting element (40) and engage into longitudinal slots (46) of the connecting element (40).

7. Device (10) according to one of the preceding claims, **characterized in that** elongated holes (48) are provided opposite one another in the side walls (44) of the connecting element (40), which elongated holes, together with bearing pins (36) on the side walls (32) of the attachment element (28), form the joint parts of the joint.

8. Device (10) according to Claim 7, **characterized in that**, on the inner sides of the side walls (44) of the connecting element (40), assembly bevels (50) lead from those edges which face towards the attachment element (28) to the slots (48).

9. Wiper blade (14) comprising a device (10) according to one of the preceding claims.

## Revendications

1. Dispositif (10) de liaison articulée entre un balai d'essuie-glace (14) et un bras d'essuie-glace (12), un élément de raccordement (28) devant être relié au balai d'essuie-glace (14) comprenant une partie d'articulation (36) qui, conjointement avec une partie d'articulation (48) sur un élément de liaison (40) devant être relié au bras d'essuie-glace (12), forme une articulation et des parois latérales (32, 44) de l'élément de raccordement (28) et de l'élément de liaison (40) se chevauchant, au moins un élément d'amortissement (54, 60) étant disposé entre l'élément de raccordement (28) et l'élément de liaison (40), **caractérisé en ce qu'**au moins deux nervures transversales (38) sont prévues entre les parois latérales (32) de l'élément de raccordement (28) sur le fond (34) de l'élément de raccordement (28), lesquelles nervures transversales forment entre elles en espace intermédiaire (56) qui est recouvert par l'élément de liaison (40) dans la position de fonctionnement du balai d'essuie-glace (14) et dans lequel est logé l'élément d'amortissement (54, 60), l'élément d'amortissement (54, 60) s'appuyant contre l'élément de raccordement (28) et contre l'élément de liaison (40).

2. Dispositif (10) selon la revendication 1, **caractérisé en ce que** l'élément d'amortissement (54, 60) est disposé dans la région de l'articulation (36, 48).

3. Dispositif (10) selon la revendication 1 ou 2, **caractérisé en ce que** l'élément d'amortissement (60) est un cylindre.

4. Dispositif (10) de liaison articulée entre un balai d'essuie-glace (14) et un bras d'essuie-glace (12), un élément de raccordement (28) devant être relié au balai d'essuie-glace (14) comprenant une partie d'articulation (36) qui, conjointement avec une partie d'articulation (48) sur un élément de liaison (40) devant être relié au bras d'essuie-glace (12), forme une articulation et des parois latérales (32, 44) de l'élément de raccordement (28) et de l'élément de liaison (40) se chevauchant, au moins un élément d'amortissement (54, 60) étant disposé entre l'élément de raccordement (28) et l'élément de liaison (40), **caractérisé en ce que** l'élément d'amortissement (54) est un prisme allongé en section transversale, en particulier un prisme rhomboïde qui s'applique par l'intermédiaire d'une arête sur le fond (34) de l'élément de raccordement (28) tandis que l'arête opposée est tournée vers l'élément de liaison (40).

5. Dispositif (10) selon l'une quelconque des revendications précédentes, **caractérisé en ce que** l'élément d'amortissement (54, 60) est un profilé creux dont l'espace creux (58) s'étend transversalement par rapport à la direction longitudinale du balai d'essuie-glace (14).

6. Dispositif (10) selon l'une quelconque des revendications précédentes, **caractérisé en ce que** les parois latérales (32) de l'élément de raccordement (28) sont recouvertes depuis l'extérieur par les parois latérales (44) de l'élément de liaison (40) et viennent en prise dans des fentes longitudinales (46) de l'élément de liaison (40).

7. Dispositif (10) selon l'une quelconque des revendications précédentes, **caractérisé en ce que** des trous oblongs (48) opposés l'un à l'autre sont prévus dans les parois latérales (44) de l'élément de liaison (40), lesquels trous oblongs forment, conjointement avec des tourillons de palier (36) sur les parois latérales (32) de l'élément de raccordement (28), les parties d'articulation de l'articulation.

8. Dispositif (10) selon la revendication 7, **caractérisé en ce que**, sur les côtés intérieurs des parois latérales (44) de l'élément de liaison (40), des biseaux de montage (50) mènent des arêtes qui sont tournées vers l'élément de raccordement (28) jusqu'aux trous oblongs (48).

9. Balais d'essuie-glace (14) comportant un dispositif (10) selon l'une quelconque des revendications précédentes.
